# EUROPEAN PATENT APPLICATION

(11) **EP 3 471 030 A2**
(43) Date of publication of application: **17.04.2019**
(21) Application number: 18200221.2
(22) Date of filing: 12.10.2018
(51) Int. Cl.: G06Q 10/04, G06Q 10/08, B07C 5/00, B07C 3/00, B07C 5/36

(54) **SORTING SYSTEM AND METHOD**

(30) Priority: 16.10.2017 JP 2017200508
(71) Applicant: Kabushiki Kaisha Toshiba, Minato-ku Tokyo 105-0023 (JP); Toshiba Infrastructure Systems & Solutions Corporation, Kawasaki-shi, Kanagawa 212-0013 (JP)
(72) Inventor: SEZAKI, Kentaro, Kawasaki-shi, Kanagawa 212-0013 (JP); OHKAWA, Yasuhiro, Minato-ku, Tokyo 105-0023 (JP); KOJIMA, Hidetaka, Kawasaki-shi, Kanagawa 212-0013 (JP)
(74) Representative: Horn Kleimann Waitzhofer Patentanwälte PartG mbB

(57) **Abstract**

In an embodiment, a sorting system includes a sorting device configured to sort items by destination and to group items to be shipped to a common destination at a sorting destination of the sorting device. A control device is configured to receive information about the items being shipped to the common destination and to select a box type to accommodate the items going to the common destination based on the received information about the items. An information providing device is configured to indicate the box type that has been selected by the control device.

## Description

### FIELD

Embodiments described herein relate generally to a sorting system.

### BACKGROUND

There is a publicly known sorting system which sorts items of merchandise, freight, goods, and parts by intended destination such as an address. The sorting system reads identification information from items being moved along on a conveyance path, and then sorts the items according to the destinations associated with the identification information. The items sorted by the sorting system can then packed in boxes, containers, or the like for shipment to the various destinations . However, on a sorting system of the related art, the sorted items may not be packed in packaging (boxes or containers) which are specifically matched to the sizes and/or weights of the particular items being shipped together.

### DESCRIPTION OF THE DRAWINGS

FIG. 1 is a block diagram illustrating a sorting system according to an embodiment.
FIG. 2 is a plan view illustrating a sorting device according to an embodiment.
FIG. 3 is a side view schematically illustrating a sorting chute used in the sorting device according to an embodiment.
FIG. 4 is a side view schematically illustrating a sorting chute used in the sorting device according to an embodiment.
FIG. 5 illustrates a merchandise database in the sorting system according to an embodiment.
FIG. 6 illustrates an individual (addressee) database in the sorting system according to an embodiment.
FIG. 7 schematically illustrates a first operation example of a sorting system according to an embodiment.
FIG. 8 is a flowchart describing the first operation example of a sorting system according to an embodiment.
FIG. 9 schematically illustrates a second operation example of a sorting system according to an embodiment.
FIG. 10 is a flowchart of a second operation example of a sorting system according to an embodiment.

### DETAILED DESCRIPTION

Embodiments provide a sorting system which can select a packaging that is suitable for packing items that have been sorted to particular destinations.

In general, according to an embodiment, a sorting system includes a sorting device configured to sort items by destination and to group items to be shipped to a common destination at a sorting destination of the sorting device. A control device is configured to receive information, such as item size and/or weight, related to the items being shipped to the common destination and to select a box type to accommodate those items going to the common destination using on the received information about the items. An information providing device, such as speaker, visual display, or other signaling apparatus, is configured to indicate the box type that has been selected by the control device.

Hereafter, example embodiments will be described with reference to the accompanying drawings.

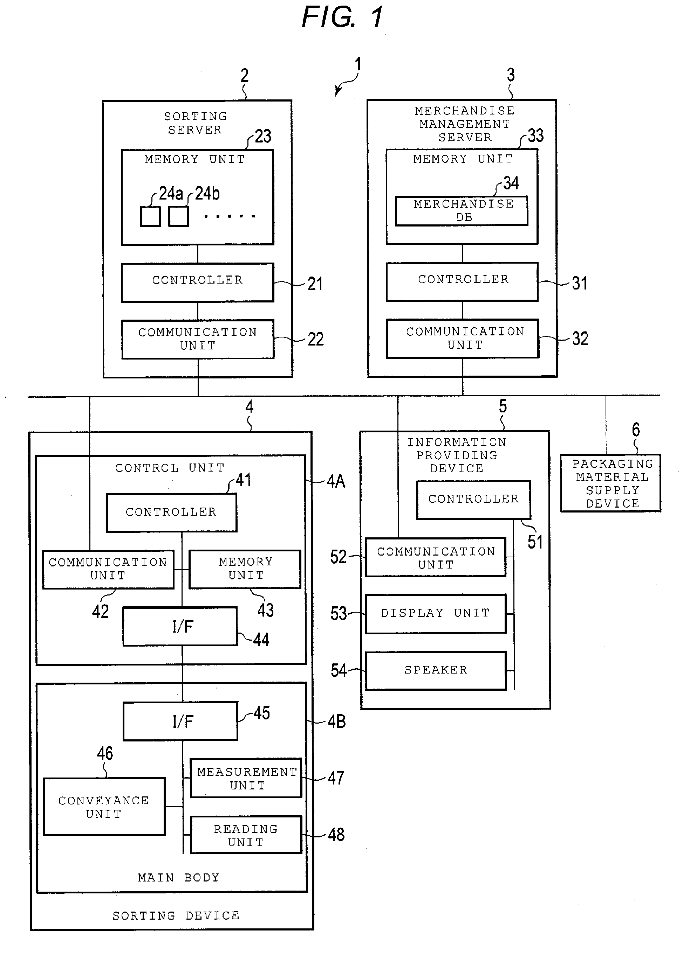

FIG. 1 is a block diagram illustrating a sorting system 1 according to an embodiment, and a control system for the devices.

As illustrated in FIG. 1, the sorting system 1 includes a sorting server 2, a merchandise management server 3, a sorting device 4, an information providing device 5, and a packaging material supply device 6. In the sorting system 1, the sorting server 2 is connected to the merchandise management server 3, the sorting device 4, the information providing device 5, and the packaging material supply device 6 through a network.

The sorting server 2 controls a merchandise sorting process by the sorting device 4. The sorting server 2 manages a packing operation for sorted items. The sorting server 2 acquires merchandise order information for each individual (or particular address) as information indicating items to be packed together. When acquiring the order information on the items, the sorting server 2 sets a sorting destination for each individual (address) and controls the sorting device 4 to sort the items, in order to pack the items for the individual address in one group.

The sorting server 2 has a function of selecting a packaging type for packing all items in the group of items being sorted to each sorting destination by the sorting device 4. The packaging material may include a box for accommodating items therein. For example, when the sorting of all the items to a sorting destination by the sorting device 4 is completed, the sorting server 2 selects a packaging type into which the items sorted to the sorting destination can be packed, and supplies information indicating the selected packaging to the information providing device 5 and the packaging material supply device 6.

In the configuration example illustrated in FIG. 1, the sorting server 2 includes a controller 21, a communication unit 22, and a memory unit 23.

The controller 21 performs various controls and data processes. The controller 21 includes a processor, a system memory, and various interfaces, and performs various controls and data processes by controlling the processor to execute a program stored in the system memory or the memory unit 23.

The communication unit 22 is an interface for communicating through the network. That is, the controller 21 communicates with the merchandise management server 3, the sorting device 4, the information providing device 5, and the packaging material supply device 6 through the communication unit 22. The communication unit 22 may function as an interface for acquiring information indicating a plurality of items to be packed together. For example, the communication unit 22 may communicate with an order server which receives a merchandise order from a customer, and acquire merchandise order information for each ordering individual (or for shipment address).

The memory unit 23 in sorting server 2 includes a rewritable nonvolatile memory. The memory unit 23 includes a memory device such as an HDD or SSD, for example. The memory unit 23 includes an individual database DB 24 for registering information on items for each sorting destination (address), which are sorted by the sorting device 4. The individual DB 24 is provided for each sorting destination. The individual DB 24 will be described in detail later.

The merchandise management server 3 manages information of items which are to be sorted by the sorting device 4. For example, the merchandise management server 3 manages information such as the size and weight of each item of merchandise in association with identification information of the items as information related to the items. The merchandise management server 3 provides information related to the items of merchandise according to a request from the sorting server 2.

In the configuration example illustrated in FIG. 1, the merchandise management server 3 includes a controller 31, a communication unit 32, and a memory unit 33.

The controller 31 performs various controls and data processes. The controller 31 includes a processor, a system memory, and various interfaces, and performs various controls and data processes by controlling the processor to execute a program stored in the system memory or the memory unit 33.

The communication unit 32 is an interface for communicating through the network. In this embodiment, the communication unit 32 may serve to perform communication with the sorting server 2.

The memory unit 33 includes a rewritable nonvolatile memory. The memory unit 33 includes a memory device such as an HDD or SSD, for example. The memory unit 33 includes a merchandise DB 34 for registering information on all items which are to be sorted by the sorting device 4. The merchandise DB 34 stores information such as the size and weight of each item of merchandise as information related to the merchandise.

The sorting device 4 serves to sort supplied items to preset sorting destinations. The sorting device 4 conveys the supplied items, reads identification information for sorting the items from the conveyed items, and sorts the items specified by the read identification information to the preset sorting destinations, based on information designated by the sorting server 2.

In the configuration example illustrated in FIG. 1, the sorting device 4 includes a control unit 4A and a main body 4B. The control unit 4A includes a controller 41, a communication unit 42, a memory unit 43, and an interface (I/F) 44, and the main body 4B includes an I/F 45, a conveyance unit 46, a measurement unit 47, and a reading unit 48.

The controller 41 performs various controls and data processes. The controller 41 includes a processor, a system memory, and various interfaces. The controller 41 performs various controls and data processes by controlling the processor to execute a program stored in the system memory or the memory unit 43.

The communication unit 42 is an interface for communicating through the network. In this embodiment, the communication unit 42 may serve to perform communication with the sorting server 2.

The memory unit 43 includes a rewritable nonvolatile memory. The memory unit 43 includes a memory device such as an HDD or SSD, for example. The memory unit 43 stores settings indicating the sorting destinations of the respective items. The memory unit 43 may store information indicating the particular packaging materials installed at the respective sorting destinations.

The I/F 44 is an interface for communication and connection with the respective units within the main body 4B. The I/F 44 may connect the controller 41 to the respective units of the main body 4B, such that the controller 41 can communicate with the respective units. For example, the I/F 44 may include a plurality of interfaces corresponding to the respective units of the main body 4B which are connection destinations at the main body 4B.

The I/F 45 is an interface for communication and connection with the control unit 4A. The I/F 45 may include a plurality of interfaces which connect the respective units within the main body 4B to the control unit 4A.

The conveyance unit 46 includes a conveyance mechanism for conveying merchandise and a mechanism for sending merchandise to a preselected sorting destination (e.g., a particular sorting chute). The conveyance unit 46 includes a driving source to drive the conveyance mechanism, and operates according to a control instruction from the control unit 4A connected through the I/F 45. The conveyance unit 46 conveys items through the conveyance mechanism, and sorts the conveyed items to designated sorting chutes according to a control instruction from the control unit 4A. The conveyance unit 46 may include sensors installed at designated places of the conveyance path on which items are conveyed.

The measurement unit 47 measures the conveyed items of merchandise. The measurement unit 47 includes a sensor for measuring the size of the conveyed items. For example, the measurement unit 47 may include a laser range finder for three-dimensionally measuring the shape and size of an item. Furthermore, the measurement unit 47 may include a sensor (scale) for measuring the weight of an item. The measurement unit 47 supplies the measurement information to the control unit 4A.

The reading unit 48 reads identification information from the conveyed merchandise. The reading unit 48 supplies the identification information as read or otherwise information including the identification information to the control unit 4A. For example, the reading unit 48 may include a code reader for reading a code indicating the identification information on the outer surface of the merchandise. The reading unit 48 may acquire image information by filming a region including the identification information provided on the outer surface of the merchandise. In this case, the reading unit 48 may supply a result obtained by recognizing the identification information from the acquired image information to the control unit 4A, and supply the image information obtained by filming the outer surface of the merchandise to the control unit 4A. The reading unit 48 may read the identification information from a wireless tag attached to the merchandise, through wireless communication.

The information providing device 5 serves to supply information to an operator. The information providing device 5 supplies information to an operator, the information indicating a packaging type for packing items sorted to a single sorting destination by the sorting device 4. These items correspond to all items of merchandises which are to be packed together for shipment or transport. For example, the information providing device 5 displays information on a display unit or outputs the information as a voice through a speaker, the provided information indicates the type of box to be used for packing the items sorted to a particular sorting destination by the sorting device 4. The information providing device 5 is disposed in a packing operation site for packing the items that have been sorted by the sorting device 4.

In the configuration example illustrated in FIG. 1, the information providing device 5 includes a controller 51, a communication unit 52, a display unit 53, and a speaker 54.

The controller 51 performs various controls and data processes. The controller 51 includes a processor, a system memory, and various interfaces, and performs various controls and data processes by controlling the processor to execute a program stored in the system memory.

The communication unit 52 is an interface for communicating through the network. In this embodiment, the communication unit 52 may communicate with at least the sorting server 2.

The display unit 53 displays information supplied from the sorting server 2. For example, the display unit 53 displays information supplied from the sorting server 2 indicating a selection of a packaging material (e.g., the type of a box or shipping container) for packing all the sorted items going together to a common destination. The speaker 54 outputs the information provided from the sorting server 2 as a voice. For example, the speaker 54 outputs information as a voice indicating a packaging material type that has been selected by the sorting server 2.

The information providing device 5 may inform an operator of the selection by the sorting server 2 by using AR (Augmented Reality) technology. The information providing device 5 may include, for example a display unit installed in the packing operation site, a glasses -type display unit worn by an operator, or a portable terminal carried by an operator.

The packaging material supply device 6 serves to supply a packaging material (such as a box) for packing items of merchandise. In the embodiment, the packaging material supply device 6 stores a packaging materials to be used to pack the items at a sorting destination of the sorting device 4. For example, the packaging material supply device 6 supplies the packaging selected by the sorting server 2 to the packing operation site where the sorted items are packed into boxes or the like. A packaging material supply device 6 may be omitted in some embodiments.

Next, the configuration of the sorting device 4 will be described in detail.

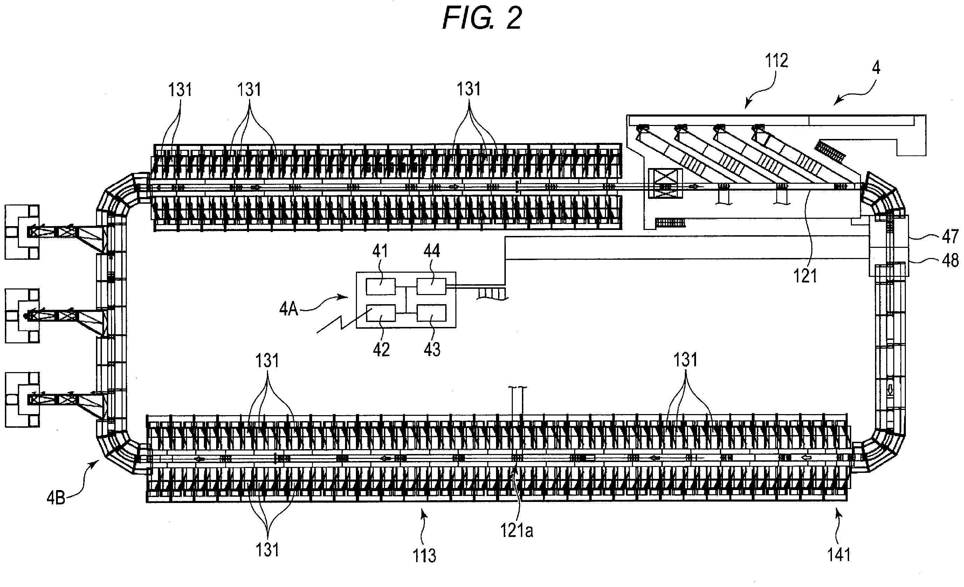

FIG. 2 is a plan view illustrating a configuration example of the sorting device 4 according to the embodiment.

As illustrated in FIG. 2, the sorting device 4 includes the control unit 4A, the main body 4B, an induction 112, and a chute group 113. The chute group includes a plurality of sorting chutes 131 which are set as sorting destinations. The sorting device 4 conveys items M fed into the main body 4B by the induction 112, specifies a sorting chute as the sorting destination of a conveyed item M based on identification information read from the item M, and sorts the items M to selected sorting chutes 131 in the chute group 113.

The identification information of the item M may be displayed or otherwise provided on the item M so as permit reading by the reading unit 48. For example, an image including a code, character or symbol indicating the identification information is provided on the outer surface of the item M. The identification information may indicate the address or sorting destination of the item M by coding, and may provide merchandise identification information for the item M. This particular example embodiment is based on the assumption that encoded identification information is provided on the outer surface of the item M, and the reading unit 48 reads the encoded identification information on the item M. For example, the identification information may be provided as a barcode printed on a label on the item M. The label may be adhered on the outer surface of the item M, and be read by the reading unit 48 when the item M is initially placed on the conveyance path 121 of the main body 4B.

The main body 4B includes the conveyance path 121 constructed in a ring shape, a conveyance unit 46 having a driving source for moving the conveyance path 121, a measurement unit 47 for measuring the dimensions of items M, and the reading unit 48 for reading identification information (address or sorting code).

The conveyance path 121 defines the conveyance direction of item M. The conveyance path 121 is appropriately set based on the shape of the sorting device 4. The conveyance path 121 includes a plurality of cells 121a connected in a ring shape for placing items M. The conveyance path 121 is disposed at a predetermined height position with respect to the installation surface of the sorting device 4. Each of the cells 121a is a sorter which can move the merchandise M placed on the upper surface thereof to a predetermined sorting chute 131. The cell 121a includes a belt which is driven in a direction crossing the moving direction of the conveyance path 121. The driving source moves the conveyance path 121 in one direction.

The measurement unit 47 is disposed on the conveyance path 121 between the induction 112 and the chute group 113. The measurement unit 47 measures the dimension (size) of the merchandise M on the conveyance path 121. The measurement unit 47 transmits information to the control unit 4A, the information indicating the measured size of the merchandise M. The measurement unit 47 may be provided in the induction 112. The measurement unit 47 may include a sensor for measuring the weight of the merchandise M on the conveyance path 121.

The reading unit 48 reads identification information provided on the merchandise M. For example, when a code indicating identification information is provided on a part of the outer surface of the merchandise M, the reading unit 48 includes a barcode reader. The reading unit 48 transmits information to the control unit 4A, the information including the identification information read from the merchandise M. For example, the reading unit 48 transmits identification information to the control unit 4A, the identification information corresponding to a result obtained by reading the code on the outer surface of the merchandise M. The reading unit 48 may be provided in the induction 112.

The induction 112 is a conveyer for supplying the merchandise M. The induction 112 places the fed merchandise M on a cell 121a of the conveyance path 121. The merchandise M is placed on a single cell 121a or a plurality of cells 121a adjacent to each other, depending on the size of the merchandise M.

The chute group 113 includes a plurality of sorting chutes 131. The plurality of sorting chutes 131 are successively provided along the conveyance path 121. For example, as illustrated in FIG. 2, the sorting chutes 131 of the chute group 113 are provided at predetermined positions of the conveyance path 121 in a direction crossing the extension direction of the conveyance path 121, such that the conveyance path 121 is interposed between the sorting chutes 131. In the chute group 113, the merchandise M is sent to the sorting chute 131 set as the sorting destination based on the identification information read by the reading unit 48.

For example, the controller 41 of the control unit 4A determines the sorting chute 131 to which the merchandise M is to be fed, based on the identification information of the merchandise M, read by the reading unit 48. When the merchandise M reaches the sorting chute 131 to which the merchandise M is to be fed by the conveyance path 121, the controller 41 drives the corresponding cell 121a to send the merchandise M to the sorting chute 131. The sorting chute 131 feeds the merchandise M supplied from the conveyance path 121 into a tray T or box (or other packaging) set at a predetermined position (e.g., the lower end of the sorting chute).

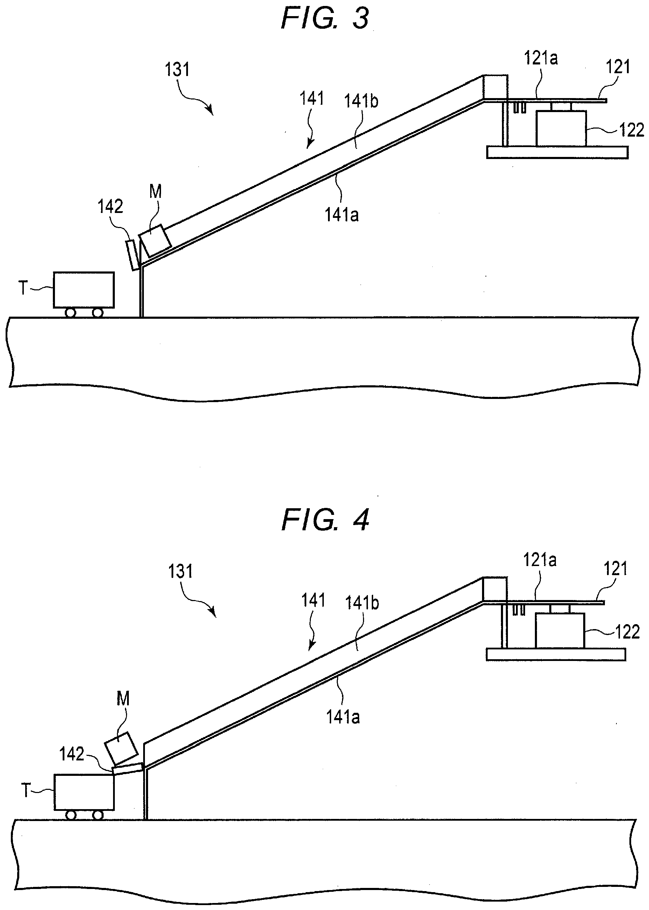

FIGS. 3 and 4 are side views schematically illustrating the configuration example of the sorting chute 131 in the sorting device 4.

As illustrated in FIG. 2 or 3, the sorting chute 131 includes a chute body 141 and a sorting plate 142. At the lower end (predetermined position) of the sorting chute 131, a tray T is provided. The tray T may include a container or mail box into which merchandise M is put. Furthermore, a packaging material such as a box for packing items M for each sorting destination may be disposed at the lower end of the sorting chute 131.

The chute body 141 includes a bottom wall 141a constituting an inclined surface and extending in one direction, and a pair of side walls 141b provided at two sides facing each other along the longitudinal direction of the bottom wall 141a. For example, the chute body 141 is a direct feed-type chute which can directly accommodate the merchandise M in the storage container T.

The inclined upper surface of the bottom wall 141a constitutes the conveyance path on which the merchandise M is moved. The inclination angle of the bottom wall 141a is set to a predetermined inclination angle. The predetermined inclination angle indicates an angle at which the merchandise M can be slid on the upper surface of the bottom wall 141a by its weight or a roller driven by a motor (not illustrated).

The sorting plate 142 closes a lower end opening of the chute body 141, or rotates in the moving direction of the merchandise M of the chute body 141 around the lower end of the chute body 141, and opens the opening of the lower end of the chute body 141. The opening of the lower end of the chute body 141 is an end portion located at the bottom of the chute body 141, and includes by the bottom wall 141a and the side walls 141b.

The sorting plate 142 illustrated in FIGS. 3 and 4 may be omitted, and the merchandise M may be directly fed into the tray T from the chute body 141.

Next, the merchandise DB 34 of the merchandise management server 3 will be described.

The merchandise DB 34 serves to store information related to items. In the embodiment, information on all items which are to be sorted by the sorting device 4 may be registered in the merchandise DB 34. In the configuration example illustrated in FIG. 1, the merchandise DB 34 is provided in the memory unit 33 of the merchandise management server 3 which can communicate with the sorting server 2. However, the merchandise DB 34 may be stored in the memory unit which can be accessed by the controller 21 of the sorting server 2. For example, the merchandise DB 34 may be provided in the memory unit 23 of the sorting server 2.

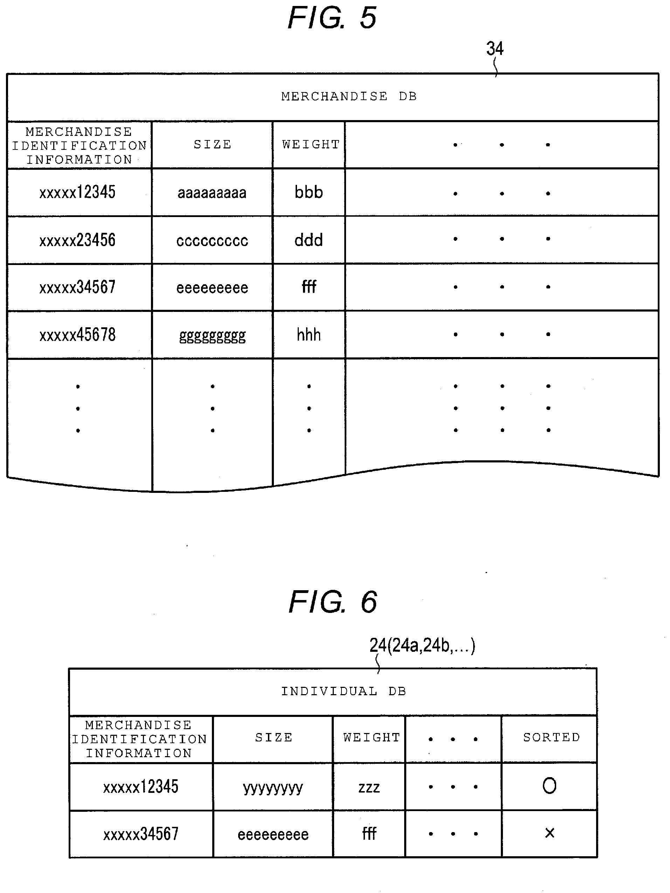

FIG. 5 illustrates a configuration example of the merchandise DB 34.

In the configuration example illustrated in FIG. 5, plural pieces of information indicating sizes and weights of items are registered in the merchandise DB 34, the information being associated with the identification information of the items. The information registered in the merchandise DB 34 may not only include the information on the characteristics of the items, such as the sizes or weights of the items, but also include information used for sorting or packing the items. For example, the information registered in the merchandise DB 34 may include merchandise names, the storage places of items, the stock quantities of items, and considerations when items are packed. The considerations may include information on whether each of the items can be loaded, the placement direction of the merchandise, and information on which the merchandise needs to be refrigerated or frozen. The merchandise DB 34 may be registered with information on the sizes or weights of items, as long as the measurement unit 47 of the sorting device 4 can measure the sizes or weights of the items.

Next, the individual DB 24 (24a, 24b etc.) of the sorting server 2 will be described.

The individual DB 24 is generated for each merchandise group to be packed together. In this embodiment, since items to be packed are sorted to one sorting destination by the sorting device 4, the individual DB 24 is generated for each sorting destination of items in the sorting device 4. In the configuration example illustrated in FIG. 1, the individual DB 24 is provided in the memory unit 23 of the sorting server 2. However, the individual DB 24 may be provided in the memory unit which can be accessed by the controller 21 of the sorting server 2. For example, the individual DB 24 may be provided in the memory unit 43 of the sorting device 4, or provided in a memory device installed in a device provided separately from the sorting server 2 with which the controller 21 can communicate.

The individual DB 24 registers information on items which are sorted to one sorting destination (sorting chute 131) by the sorting device 4. The information on the items, registered in the individual DB 24, includes information for selecting a packaging type for each sorting destination. The individual DB 24 may register the information on the items by referring to the merchandise DB 34, or register information measured by the sorting device 4 as the information on the items.

In a first operation example, whenever the sorting device 4 sorts an item to a sorting destination, information on the sorted item is registered in the individual DB 24. Therefore, in the first operation example, the individual DB 24 in which information on all items is registered is finalized when the sorting is ended. Furthermore, in the first operation example, since the information on the sorted items is registered in the individual DB 24 during sorting, the information measured by the sorting device 4 can also be registered in the individual DB 24.

In a second operation example, when the sorting server 2 acquires information indicating all items to be packed together, information on the items, obtained by referring to the merchandise DB 34, is registered in the individual DB 24 corresponding to a sorting destination. Therefore, in the second operation example, the individual DB 24 in which the information on all items is registered is completed, before the sorting device 4 actually sorts the items.

FIG. 6 illustrates a configuration example of the individual DB 24.

In the configuration example illustrated in FIG. 6, the individual DB 24 registers information indicating the sizes and weights of sorted items, the information being associated with merchandise identification information of the items. The information registered in the individual DB 24 may include information acquired from the merchandise DB 34 or information on sizes or weights measured by the sorting device 4. The individual DB 24 may register information as the information on the items, the information indicating whether the items can be loaded, the placement orientations of the items, and the types of the items (for example, information on whether the items need to be refrigerated or frozen).

Next, the first operation example of the sorting system 1 will be described.

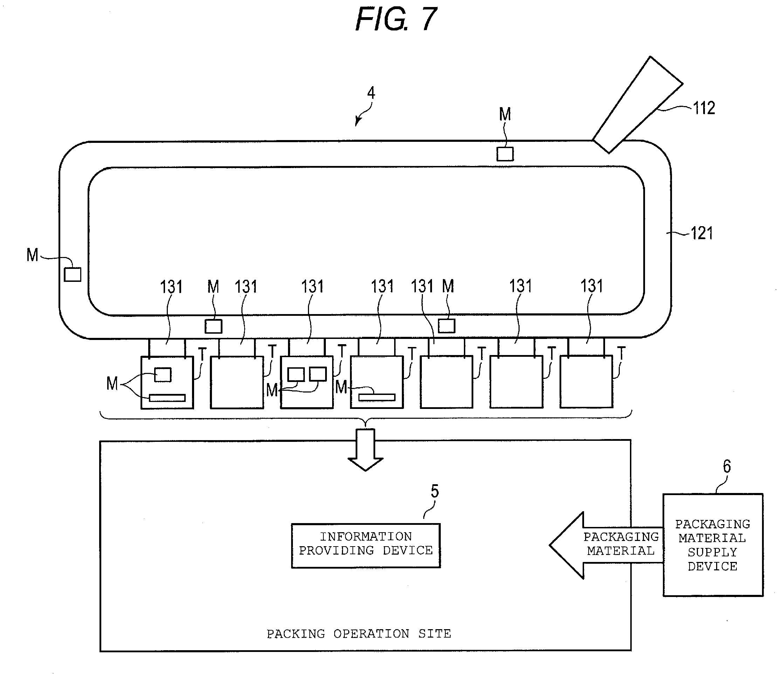

FIG. 7 schematically illustrates the first operation example of the sorting system 1.

The first operation example is based on the supposition that the sorting device 4 accommodates items to be packed in one group in the tray T set for each sorting destination (sorting chute 131), and a packaging material notified by the information providing device 5 (or a packaging material supplied by the packaging material supply device 6) is used to pack all of the items of the tray T in one set at a packing operation site. The packing operation site may be set to the lower end of the sorting chute 131 (e.g., the position at which the tray T is set), or a place separated from the sorting device 4 to which the tray T (which may be a cart in some examples) can be moved.

In the first operation example, when the sorting device 4 completes sorting all items which need to be sorted to each sorting destination, the sorting server 2 selects a packaging material (box) for packing all of the items sorted to the corresponding sorting destination in one. Based on the information on the items registered in the individual DB 24 corresponding to the sorting destination, the sorting server 2 selects a packaging material (box) suitable for packing all of the items in one group. All of the items may refer to all items sorted to a particular sorting destination by the sorting device 4 or all items accommodated in one tray T.

The sorting server 2 informs an operator of the information indicating the selected packaging material, through the information providing device 5. The information providing device 5 receives the information indicating the selection from the sorting server 2, and displays the information indicating the selected packaging material on the display unit 53 or outputs the information as a voice through the speaker 54. Therefore, an operator in the packing operation site can easily select a packaging material for packing items in one set, and the items are accommodated together in one tray T.

The sorting server 2 may indicate the selection to the packaging material supply device 6, and the packaging material supply device 6 may supply packaging material to be used for packing together the items accommodated in one tray T. In this case, the operator can efficiently perform the packing using the packaging material supplied from the packaging material supply device 6.

Next, the operation of the sorting system 1 in the first operation example will be described.

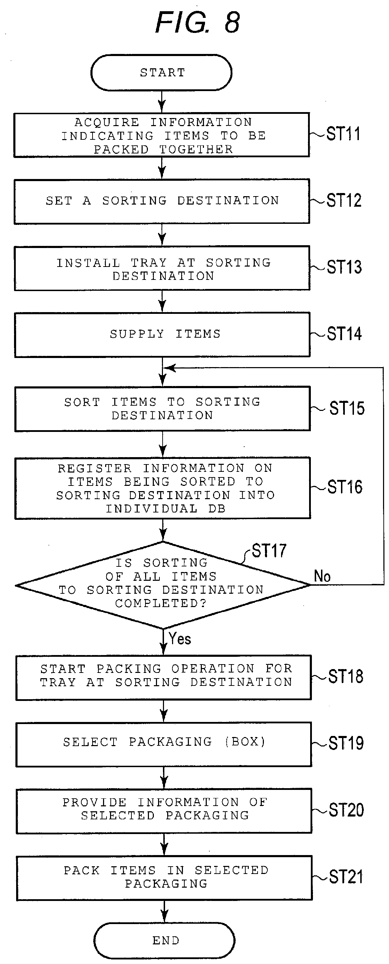

FIG. 8 is a flowchart for describing an operation example of the sorting system 1 in the first operation example according to the embodiment.

The controller 21 of the sorting server 2 acquires information (packed merchandise information) indicating which items are to be packed together (ST11). For example, the controller 21 acquires merchandise order information for each address as the packed merchandise information. The sorting server 2 may acquire the packed merchandise information from an external device, such as a merchandise order receiving device, which can communicate through the communication unit 22. The packed merchandise information may be acquired as information inputted by an operator through an operator input device. The example embodiment is based on the assumption that items indicated by the packed merchandise information are to be packed together, although in some instances only one item may be packed (by itself) when no other items are listed/indicated by the packed merchandise information.

When the packed merchandise information is acquired, the controller 21 determines (sets) one sorting chute 131 from the chute group 113, the sorting chute 131 corresponding to the sorting destination of the items indicated by the packed merchandise information (ST12). When the sorting chute 131 corresponding to the sorting destination is determined, the controller 21 sets a tray T for accommodating the items at a predetermined position (lower end) of the sorting chute 131 set as the sorting destination (ST13) . For example, the controller 21 may support an operation of the operator to install the tray T, by informing the operator of the sorting chute at which the tray T is set, using the information providing device 5. Furthermore, when the tray T is moved by a moving device or moves by itself, the controller 21 designates an installation position for the moving device for moving the tray T, such that the tray T is installed at the lower end of the sorting chute set as the sorting destination.

All of the items M indicated by the packed merchandise information acquired through the sorting server 2 are fed into the induction 112. The induction 112 supplies the fed items M to the conveyance path 121 (ST14). All of the items M indicated by the packed merchandise information are fed into the induction 112 by an operator or a robotic merchandise picking system. For example, the merchandise picking system receives the packed merchandise information from the sorting server 2, specifies the items M indicated by the packed merchandise information, then picks the specified items from a warehouse or the like using a robot, and feeds the picked items M to the induction 112. Alternatively, the operator may manually pick the items M indicated by the packed merchandise information from a warehouse or the like, and then feed the items into the induction 112.

When the items M are supplied to the conveyance path 121 by the induction 112, the sorting device 4 sorts the items M conveyed through the conveyance path 121 to a sorting chute (ST15). That is, the conveyance unit 46 of the main body 4B in the sorting device 4 conveys the items M supplied from the induction 112 through the conveyance path 121. The measurement unit 47 measures the sizes of the items M conveyed through the conveyance path 121, and supplies information indicating the measured sizes of the items M to the control unit 4A. The reading unit 48 reads the identification information of the items M conveyed through the conveyance path 121, and supplies information including the read identification information of the items M to the control unit 4A.

The controller 41 of the control unit 4A determines a sorting chute 131 corresponding to the sorting destination of the items M, based on the identification information of the items M, as read by the reading unit 48. When the sorting chute 131 corresponding to the sorting destination of the items M is determined, the controller 41 controls the conveyance unit 46 to send the item M to the sorting chute 131 corresponding to the sorting destination. When the items M are sent to the sorting chute 131, the controller 41 supplies information to the sorting server 2 indicating the items M have been sorted. In this case, the controller 41 may also supply information to the sorting server 2 indicating the sizes of the items M as measured by the measurement unit 47.

When the controller 21 of the sorting server 2 acquires the information corresponding to the sorted items M from the sorting device 4, the controller 21 registers the information for the sorted items in the individual DB 24 generated for each sorting destination (ST16). For example, the controller 21 generates the individual DB 24 for each sorting destination in the memory unit 23. Whenever an item of merchandise is sorted to the sorting destination (e.g., a sorting chute 131), the controller 21 registers information of the sorted item in the individual DB 24 corresponding to the particular sorting destination. The information registered in the individual DB 24 includes information for selecting packaging material. For example, as illustrated in FIG. 6, the individual DB 24 registers information indicating the size and weight of all the sorted merchandise in conjunction other merchandise information obtained from the merchandise DB 34.

The controller 21 acquires the information on the sorted items M from the merchandise DB 34, and registers the acquired information from the merchandise DB 34 in the individual DB 24 . In the first operation example, the controller 21 may acquire information from the merchandise DB 34, the information corresponding to the identification information read from the item M by the reading unit 48. Furthermore, the controller 21 may acquire information on the size and weight of the sorted item M from the measurement unit 47, and register the acquired information in the individual DB 24.

Once the information on a sorted item M is registered in the individual DB 24, the controller 21 determines whether the sorting of all the items for the sorting destination has been completed (ST17). When it is determined that the sorting of the items to the sorting destination corresponding to the individual DB 24 has not been completed (NO at ST17), the controller 21 repeatedly performs the process of sorting items to the sorting destination and the process of registering information in the individual DB 24.

On the other hand, when it is determined that the sorting of the items to the sorting destination corresponding to the individual DB 24 has been completed (YES at ST17), the controller 21 signals a start of a packing operation for the items M accommodated in the tray T at the sorting destination (the tray T installed at the sorting chute) (ST18) . For example, the controller 21 may inform the operator of the start of the packing operation for the items M accommodated in the tray T, and urge the operator to perform the manual packing operation. When the tray T is a self-moving tray or cart, the controller 21 may control the tray T to move to the packing operation site.

When the registering of the information on all of the items into the individual DB 24 corresponding to one sorting destination is completed, the controller 21 selects a packaging material suitable for packing all of the items together, based on the information registered in the individual DB 24, the items being sorted to the sorting destination and accommodated in the tray T (ST19).

For example, when selecting the packaging material, the controller 21 determines the size of a box based on the size of all the items to be packed together. Furthermore, the controller 21 may estimate an arrangement to be achieved when all of the items are put into a box, and select a box having a size large enough to store all of the items in the estimated arrangement. During such a selection process, the controller 21 may estimate an arrangement in which the items will be put into the box, in consideration of conditions such as information on whether each of the items can be loaded and the placement direction of the merchandise (designating the upper surface e.g. , presence of a "This end up" label) . When the arrangement of the items is estimated, the controller 21 selects a box having a size large enough to accommodate all of the items which need to be sorted, based on the sizes and arrangement of the items. The information indicating the sizes of boxes which can be selected is stored in the memory unit 23, and the controller 21 selects a box having a size sufficient to pack all of the items together from the selectable boxes. Furthermore, when the selectable boxes do not include a box having a size large enough to pack all of the items together, the controller 21 may select two or more boxes to pack all of the items.

The controller 21 may select a packaging material based on information other than the sizes of the items. For example, the controller 21 may select the type of a box according to the weights of the items to be packed. In this case, the controller 21 may select the type of a box according to the total weight of all of the items to be packed.

The controller 21 may select the type of a box according to the types of items to be packed. For example, when the items to be packed include merchandise which needs to be refrigerated or frozen, the controller 21 may select a packaging material suitable for refrigeration or freezing. Furthermore, when the items to be packed include merchandise such as a precision instrument that needs to be protected in shipment, the controller 21 may select a packaging type capable of protecting the merchandise.

When the packaging for packing the items sorted to the tray T is selected, the controller 21 informs the operator of information indicating the selected packaging type through the information providing device 5 (ST20). For example, the controller 21 displays the information indicating the packaging type on the display unit 53 of the information providing device 5. Furthermore, the controller 21 may output the information indicating the packaging selection as a voice through the speaker 54 of the information providing device 5.

The controller 21 notifies the information indicating the selected packaging to the packaging material supply device 6 (ST21). The packaging material supply device 6 supplies the packaging material used for packing the materials to the packing operation site, based on the information from the controller 21. When the packaging material supply device 6 is not installed, the controller 21 may omit the process of step ST21.

According to the first operation example, the sorting server of the sorting system acquires the packed merchandise information indicating items to be packed together, and the sorting device sets a sorting destination to which the items to be packed in one are sorted. The sorting server registers information in the individual DB, the information being related to the items sorted to the sorting destination by the sorting device. When the sorting of all the items to the sorting destination is completed, the sorting server selects a packaging type for packing all the items sorted to the sorting destination, based on the information registered in the individual DB. The information providing device informs an operator of the information indicating the packaging selected by the sorting server by displaying the information on the display unit 53 or outputting the information as a voice through the speaker 54.

Thus, according to the first operation example, the operator in the packing operation site can be informed of the packaging type that has been selected based on the information of the items sorted to the tray by the sorting device 4, and easily select packaging material for packing the items accommodated in the tray.

According to the first operation example, the information indicating the packaging selected by the sorting server is notified to the packaging material supply device 6, and the packaging material supply device 6 may supply the packaging material that has been selected by the sorting server. In this case, the operator can rapidly perform the packing of the items accommodated in the tray by using the packaging material that was supplied from the packaging material supply device 6.

Next, a second operation example of the sorting system 1 will be described.

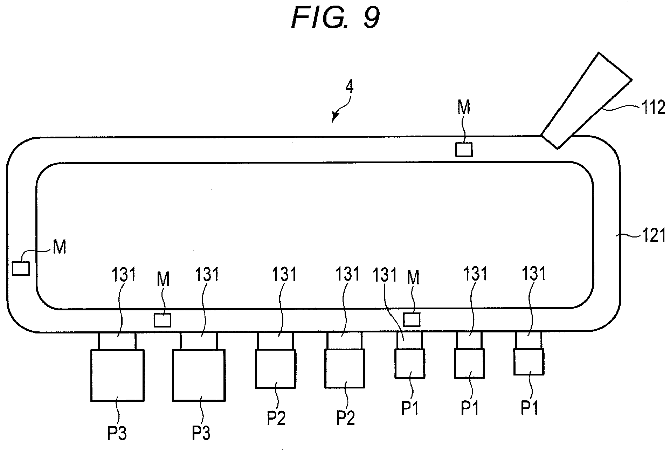

FIG. 9 schematically illustrates a second operation example of the sorting system 1.

In the second operation example, a box P (shown in different sizes P1, P2 or P3 in FIG. 9) is placed at the lower end of each sorting chute 131 of the sorting device 4, and sorted items of merchandise (items) M placed in the box P at the end of the sorting chute 131. The sorting chutes 131 have different boxes P1, P2, P3, etc., each of which may have a different sizes and/or shape. The information that indicates which size/type of box is placed at each of the respective sorting chutes is stored in the memory unit of the sorting server 2 or the memory unit 43 of the sorting device 4. When the sorting server 2 acquires information indicating items to be packed together, the sorting server 2 selects box size/type to accommodate the items to be packed together before a sorting operation of the sorting device 4 is executed. Then, the sorting server 2 selects a sorting chute 131 as the sorting destination of the items, the selected sorting chute having the selected box size (or type) installed thereon.

That is, in the second operation example, the sorting server 2 selects a box (packaging material) for packing items together at each sorting destination, and selects the sorting chute 131 to which the various items M are sorted according to the selected box at the sorting chute 131. The selection of the box type can be made before the sorting device 4 sorts the items M to their sorting destinations. Therefore, the sorting device 4 can directly place the items of merchandise into a suitable box for all the items going to each sorting destination or address. As a result, it is possible to reduce the burden on an operator to select a box for packing all the items together by moving the items from the sorting device 4 to the selected box and then to pack the items in the box.

Next, the operation of the sorting system 1 in the second operation example will be described.

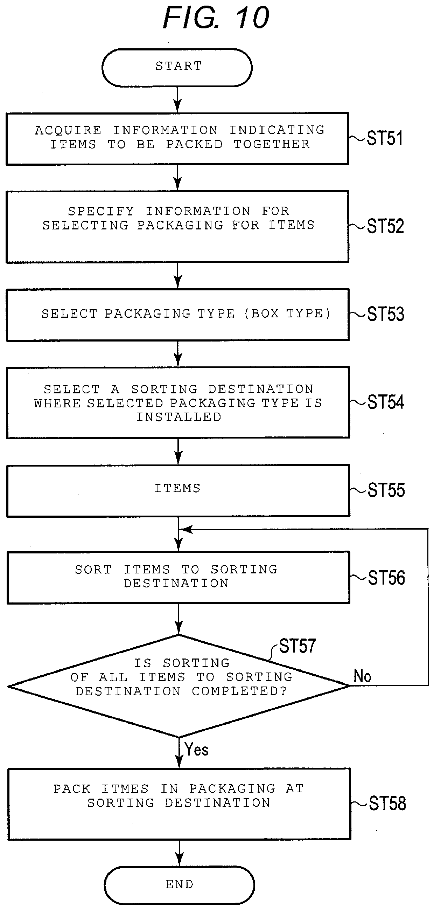

FIG. 10 is a flowchart for describing an operation example of the sorting system 1 in the second operation example according to an embodiment.

First, the controller 21 of the sorting server 2 acquires information (packed merchandise information) indicating items to be packed together (ST51). For example, the controller 21 acquires merchandise order information for each address as the packed merchandise information indicating the items to be packed together. The sorting server 2 may acquire the packed merchandise information from an external device (for example, a merchandise order receiving device) with which the sorting server 2 can communicate through the communication unit 22. The packed merchandise information may be acquired as information inputted by an operator using an input device.

When the packed merchandise information indicating the items to be packed together is acquired, the controller 21 of the sorting server 2 specifies information concerning the items of merchandise indicated by the acquired packed merchandise information (ST52). The controller 21 acquires the information about the items from the merchandise DB 34 and this information can be used for selecting a box or the like for packing all of the items indicated by the packed merchandise information as to be packed together. For example, the controller 21 specifies information indicating the sizes and weights of the items by reference to the merchandise DB 34. Furthermore, the controller 21 may specify additional information for selecting packaging from the merchandise DB 34, such as whether the items can be loaded together, the handling directions for the items, and information as to whether the items need to be refrigerated or frozen. The controller 21 generates an individual DB 24 for registering the packed merchandise information for the items to be packaged together by referring to the merchandise DB 34.

When information on the items indicated by the packed merchandise information is specified, the controller 21 selects a box type for packing all of the items together (ST53). Furthermore, when there is no box having a size large enough to pack all of the items together amongst the selectable boxes, the controller 21 may select two or more boxes to pack all of the items. Once the box (or boxes) has been selected, the controller 21 designates one of the sorting chutes 131 that has the selected box type installed thereon as the sorting destination of the items indicated by the acquired packed merchandise information (ST54).

After the sorting destination is set, the items M indicated by the packed merchandise information acquired through the sorting server 2 are fed into the induction 112 of the sorting device 4. The sorting device 4 sends the items M from the induction 112 to the conveyance path 121 (ST55) . For example, a merchandise picking system specifies the items M indicated by the packed merchandise information based on the merchandise identification information, picks the specified items from a warehouse using a robot or the like, and then feeds the picked items into the induction 112. Alternatively, an operator may manually pick the items M from a warehouse or the like, and feed the items into the induction 112.

When the items M are supplied to the conveyance path 121 by the induction 112, the sorting device 4 sorts the items M conveyed through the conveyance path 121 to the sorting chute (ST56). The sorting device 4 reads the identification information of the items M conveyed on the conveyance path 121 through the reading unit 48, and supplies information including the read identification information of the items M to the control unit 4A.

The control unit 4A may check whether the size of merchandise M, measured by the measurement unit 47, coincides with the size of the merchandise M which is registered in the individual DB 24 and specified from the information such as the merchandise DB 34. When the measured size does not coincide with the size registered in the individual DB 24, the control unit 4A may notify an error to the sorting server 2.

The controller 41 of the control unit 4A determines a sorting chute 131 corresponding to the sorting destination of the item M based on the identification information read by the reading unit 48. Once the sorting chute 131 corresponding to the sorting destination of the item M is determined, the controller 41 sorts the item M by controlling the conveyance unit 46 of the main body 4B to send the item M to the selected sorting chute 131 via the conveyance path 121. When the item M is sent to the sorting chute 131, the controller 41 supplies information to the sorting server 2 indicating the item M has been sorted.

The controller 21 of the sorting server 2 determines whether the sorting of all the items going to the sorting destination has been completed (ST57). When the sorting has not been completed (NO at ST57), the controller 21 continues to perform the operation of sorting the items M to their sorting destination.

When it is determined that the sorting of all the items M going to a particular destination has been completed (YES at ST57), the controller 21 performs an operation of packing the items M accommodated in the box P at the selected sorting chute 131 (ST58). For example, the controller 21 may inform an operator of the starting of the packing operation, and notify the operator to perform this packing operation.

According to the second operation example, the sorting device has different types of boxes (or other packaging materials) installed thereon and a plurality of sorting chutes for sending items to the different boxes. The sorting device sorts the items to a sorting chute designated as a sorting destination. The sorting server acquires the packed merchandise information indicating items to be packed in one box, specifies information for selecting a box for these items, selects the box type based on specified information, and selects a sorting chute having the selected box type installed thereon as the sorting destination for the items.

According to the second operation example, the items sorted by the sorting device can be accommodated in the box selected according to information concerning the items to be packed together and sent to the same address. As a result, it is possible to reduce the burden on an operator since the sorting device automatically selects the box types for packing all of the items going to the same destination and also can directly place the sorted items in the selected box or the like.

While certain embodiments have been described, these embodiments have been presented by way of example only, and are not intended to limit the scope of the present disclosure. Indeed, the novel embodiments described herein may be embodied in a variety of other forms; furthermore, various omissions, substitutions and changes in the form of the embodiments described herein may be made without departing from the spirit of the present disclosure. The accompanying claims and their equivalents are intended to cover such forms or modifications as would fall within the scope and spirit of the present disclosure.

## Claims

1. A sorting system, comprising:
a sorting device (4) configured to sort items by destination and to group items to be shipped to a common destination at a sorting destination of the sorting device;
a control device (2) configured to receive information about the items being shipped to the common destination and to select a box type to accommodate the items going to the common destination based on the received information about the items; and
an information providing device (5) configured to indicate the box type selected by the control device.

2. The sorting system according to claim 1, wherein
the control device (2) includes a database (24) for the sorting destination, and
the control device (2) is configured to:
store the received information about the items in the database (24) when the item is identified as being shipped to the common destination merchandise is sorted to the sorting destination by the sorting device (4), and
select the box type based on the information in the database (24) after the sorting of items has been completed.

3. The sorting system according to claim 2, wherein
the sorting device (4) includes a measurement unit (47) to measure a size of each item, and
the control device (2) is configured to store size information in the database for items based on measurements of measurement unit.

4. The sorting system according to claim 2, wherein
the sorting device (4) includes a scale to weigh items, and
the control device (2) stores weight information in the database based on based on measurements of the scale.

5. The sorting system according to claim 1, wherein the information providing device (5) indicates the box type by visual display or audible output.

6. The sorting system according to claim 1, further comprising:
a packaging material supply device (6) configured to store a plurality of box types selectable by the control device (2) .

7. The sorting system according to claim 1, further comprising:
a tray (T) to receive items at the sorting destination.

8. The sorting system according to claim 1, wherein the common destination is a shipping address.

9. The sorting system according to claim 1, further comprising:
a packing material supply device (6) configured to supply a box according to a selection of the control device.

10. A sorting system, comprising:
a sorting device (4) having a plurality of sorting chutes; and
a control device (2) configured to:
receive a list of items being shipped to a common destination,
receive packaging information for each item on the list of items,
select a packaging type according to the packaging information for each item on the list of items,
select a sorting chute from among the plurality of sorting chutes as a sorting destination for items on list according to the selected packaging type, and
control the sorting device to sort items on the list to the selected sorting chute, wherein
different sorting chutes in the plurality of sorting chutes have different packaging types associated therewith.

11. The sorting system according to claim 10, wherein the packaging information for items on the list of items is obtained from a merchandise database (34) storing packaging information in association with identification information for items to be sorted by the sorting device (4).

12. The sorting system according to claim 10, wherein the sorting device (4) includes a measurement unit (47) configured to measures dimensions of items being sorted by the sorting device (4).

13. The sorting system according to claim 10, wherein the packaging type is selected such that all items on the list of items can be accommodated together within one package of the selected packaging type.

14. The sorting system according to claim 10, wherein the control device (2) determines a possible packing arrangement of items on the list items in a box according to the received packaging information and selects the packaging type by reference determined possible arrangement.

15. A method of sorting items for shipment to a common destination using a sorting device (4), the method comprising:
receiving a list of items being shipped to a common destination;
selecting a sorting destination for items on the list,
sorting items on the list to the sorting destination using the sorting device (4);
during the sorting on the sorting device (4), obtain packaging information for each item on the list and store the packaging information in a database associated with the sorting destination;
select a packaging type to accommodate items on the list according to the stored packaging information in the database after each item on the list has been sorted to the sorting destination; and
output the selection of the packaging type.
